# EUROPÄISCHE PATENTSCHRIFT

(11) **EP 2 798 960 B1**
(45) Veröffentlichungstag und Bekanntmachung des Hinweises auf die Patenterteilung: **21.04.2021**
(21) Anmeldenummer: 14166598.4
(22) Anmeldetag: 30.04.2014
(51) Int. Cl.: A22C 5/00, B01F 7/00, B01F 7/04, B01F 15/00

(54) **Mischer zum Herstellen und/oder Behandeln eines Fleischproduktes**
Mixer for producing and/or processing a meat product
Mélangeur destiné à fabriquer et/ou traiter un produit carné

(30) Priorität: 03.05.2013 DE 102013104580
(43) Veröffentlichungstag der Anmeldung: 05.11.2014
(73) Patentinhaber: Inotec GmbH Maschinenentwicklung und Vertrieb, 72770 Reutlingen (DE)
(72) Erfinder: Domlatil, Miroslav, 72766 Reutlingen (DE)
(74) Vertreter: Patentanwälte und Rechtsanwalt Weiß, Arat & Partner mbB

(56) Entgegenhaltungen:
- CN-U- 202 497 838
- DE-A1- 10 229 694
- DE-T2- 69 623 329
- DE-U1-202006 003 961

## Beschreibung

Die Erfindung betrifft einen Mischer zum Herstellen und/oder Behandeln eines Fleischproduktes in einem Mischraum, dem eine Beleuchtung zugeordnet ist.

### Stand der Technik

Aus dem Stand der Technik wird außerdem auf die DE 20 2006 003961 U1 hingewiesen. Dort ist eine Vorrichtung zum Dosieren von Mixgetränken, mit einer Rezeptskala mit mindestens einem auf dieser aufgebrachten Rezept, wobei einzelne Skalenteile der Menge des für das jeweilige Rezept zu verwendenden Bestandteils des Mixgetränkes entsprechen, wobei die Rezeptskala so ausgebildet ist, dass die in einzelnen Bestandteilen entsprechenden Skalenteile temporär einer Füllhöhe in einem Mischgefäß zugeordnet werden können.

Aus der DE 69623329 T2 ist beispielsweise ein Verfahren und eine Vorrichtung zum Mischen und Analysieren von Lebensmitteln, Futter oder Arzneimitteln und insbesondere von Fleisch bekannt. Zerhacktes oder zerkleinertes Fleisch wird herkömmlich aus Rohmaterialien in der Form von Fleisch und Fett hergestellt, die erhalten werden, wenn Teile geschlachteter Tiere verarbeitet und zugerichtet werden. Die Rohmaterialien werden grob auf eine Partikelgrösse von 10 bis 15 mm zerkleinert und in jeweiligen Behältern oder Wannen angeordnet, von denen eine beispielsweise reines Fleisch und eine anderes fetthaltiges Fleisch oder möglicherweise reines Fett enthält. Die gewünschte Zusammensetzung des fertig gestellten Produktes wird durch Mischen der verschiedenen Typen von Fleisch- und Fettrohmaterialien in vorbestimmten Verhältnissen vorgesehen, sodass die Mischung bestimmte Vorgaben hinsichtlich Fett, Protein usw. erfüllt. Wenn das konkrete Verhältnis erreicht worden ist, werden die Rohmaterialien auf die am besten mögliche Art und Weise gemischt, ohne dass diese durch "Übermischen" verdorben werden. Anschliessend wird die Mischung aus dem Behälter ausgetragen und schliesslich auf die gewünschte Partikelgrösse beispielsweise durch einen entsprechenden Wolf zerkleinert, wonach das Produkt zur Herstellung von Wurstmassen oder anderen Produkten verwendet wird.

In vielen Fällen ist es aber auch ausreichend, wenn lediglich durch Betrachten des Mischgutes der Mischzustand überwacht wird. Zu diesem Zweck gibt es im Mischbehälter eine sogenannte Tankbeleuchtung. Diese Beleuchtung erhellt das Mischgut. Der Bediener kann das Mischgut durch eine Glasscheibe betrachten. Hierzu gibt es eine Beleuchtungstaste, die der Bediener drückt, wenn er hineinschauen will. Dazu muss er aber in der Regel auf ein Podest steigen, um überhaupt hinein schauen zu können. Wenn der Mischbehälter gross ist, ist es unmöglich, bestimmte Bereiche anzuschauen. Es gibt jedoch keine Möglichkeit, den Mischprozess kontinuierlich zu verfolgen und zu dokumentieren.

### Aufgabe

Aufgabe der vorliegenden Erfindung ist es, die Überwachung eines Mischers für Fleischprodukte wesentlich zu vereinfachen.

### Lösung der Aufgabe

Zur Lösung der Aufgabe führen die Merkmale nach Anspruch 1.

Dies bedeutet, dass kein eigenes Sichtfenster mehr vorhanden ist, das verschmutzt werden kann und immer gereinigt werden muss. Des Weiteren braucht der Bediener auch keine besonderen Anstrengungen zu unternehmen, um Kenntnis von dem Zustand des Fleischproduktes zu erhalten. Er braucht hierzu lediglich den Display bzw. Bildschirm zu betrachten, der in seiner Sichthöhe und seiner Erreichbarkeit angeordnet ist. Der Bediener braucht auch nicht direkt in die Beleuchtung reinzuschauen, sodass auch seine Augen geschont werden. Dadurch ist auch das Erkennen des Fleischproduktes bzw. des Zustandes des Fleischproduktes wesentlich verbessert. Diese Bilder und Videoaufnahmen können auch gespeichert werden, um die Rückverfolgbarkeit zu gewährleisten. Die Mischprozessüberwachung und die Rückverfolgbarkeit sind sehr wichtig.

Als Bildaufnehmer kommt eine Videokamera zum Einsatz.

In einem bevorzugten Ausführungsbeispiel ist der Bildschirm gleichzeitig auch als Bedienpanel ausgestaltet und mit entsprechenden Steuerungselementen für den Mischer versehen. Hierzu gehören unter anderem ein Knopf zum Einschalten der Beleuchtung und auch entsprechende Steuerungselemente zum Steuern der Videokamera.

### Figurenbeschreibung

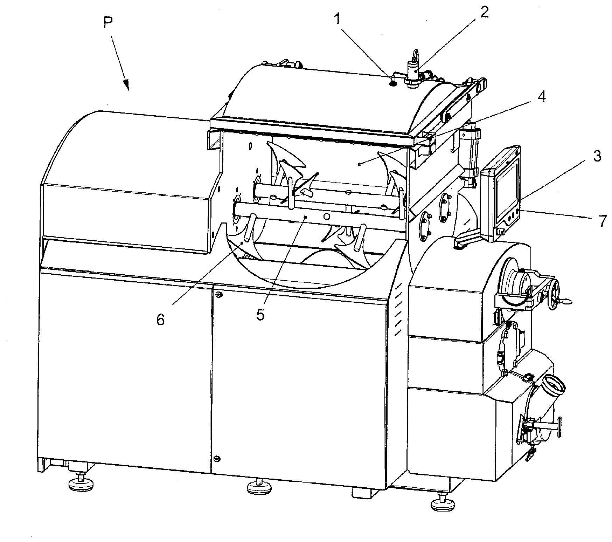

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine perspektivische und schematische Darstellung eines erfindungsgemässen Mischers P mit geöffnetem Mischraum 4. In diesem Mischraum 4 sind zwei Wellen 5.1 und 5.2 erkennbar, an denen sich Mischelemente 6 befinden, die der Vermischung eines Fleischproduktes dienen.

Dem Mischraum 4 ist eine Beleuchtung 2 zugeordnet, mit der der Mischraum 4 ausgeleuchtet werden kann.

Ebenso ist dem Mischraum 4 eine Videokamera 1 zugeordnet, über die Bilder des Mischraums 4 auf einen Bildschirm 3 übertragen werden können. Der Bildschirm 3 beinhaltet bevorzugt auch weitere Steuerungselemente für den Mischer P und unter anderem einen Knopf 7 zum Ein - und Ausschalten der Beleuchtung 2.

**Bezugszeichenliste**

| | | | | | |
|---|---|---|---|---|---|
| 1 | Videokamera | 34 | | 67 | |
| 2 | Beleuchtung | 35 | | 68 | |
| 3 | Bildschirm | 36 | | 69 | |
| 4 | Mischraum | 37 | | 70 | |
| 5 | Welle | 38 | | 71 | |
| 6 | Mischelement | 39 | | 72 | |
| 7 | Knopf | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | P | Mischer |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Mischer zum Herstellen und/oder Behandeln eines Fleischproduktes in einem Mischraum (4), dem eine Beleuchtung (2) zugeordnet ist,
**dadurch gekennzeichnet,**
**dass** der Mischraum (4) von einem Bildaufnehmer (1) betrachtbar ist, wobei der Bildaufnehmer eine Videokamera (1) ist und der Bildaufnehmer (1) mit einem Bildschirm (3) in Verbindung steht, wobei dem Mischraum (4) eine Beleuchtung (2) zugeordnet ist, mit der der Mischraum (4) ausleuchtbar ist.

2. Mischer nach Anspruch 1, **dadurch gekennzeichnet, dass** dem Bildaufnehmer ein Speicher für vom Bildaufnehmer erstellten Videos bzw. Bilder zugeordnet ist.

## Claims

1. Mixer for manufacturing and/or treating a meat product in a mixing space (4) to which a lighting system (2) is assigned,
**characterized in**
**that** in the mixing space (4) can be viewed by an image sensor (1), whereby the image receiver is a video camera (1) and the image receiver (1) is connected to a screen (3), whereby the mixing space (4) has a lighting system (2) with which the mixing space (4) can be illuminated.

2. Mixer according to claim 1, **characterized in that** the image sensor is assigned a memory for videos or images which are produced by the image sensor.

## Revendications

1. Mélangeur destiné à la fabrication et/ou au traitement d'un produit de viande dans une salle de mélange (4) à laquelle est associé un éclairage (2),
**caractérisé par le fait**
**que** la salle de mélange (4) est observée par un enregistreur d'images (1), où l'enregistreur d'images est une caméra vidéo (1) et l'enregistreur d'images (1) est en communication avec un écran (3), où à la salle de mélange (4) est associé un éclairage (2) par lequel la salle de mélange (4) peut être éclairée.

2. Mélangeur selon la revendication 1, **caractérisé par le fait qu'**à l'enregistreur d'images est associée une mémoire pour les vidéos ou les images créées par l'enregistreur d'images.
